# EUROPÄISCHE PATENTSCHRIFT

(11) **EP 2 035 683 B1**
(45) Veröffentlichungstag und Bekanntmachung des Hinweises auf die Patenterteilung: **02.12.2009**
(21) Anmeldenummer: 07785859.5
(22) Anmeldetag: 27.06.2007
(51) Int. Cl.: F02M 37/00, F02D 19/06, F02M 31/16, F02M 37/22, F02M 31/10, F02M 37/18

(54) **DIESELMOTORISCH BETRIEBENE BRENNKRAFTMASCHINE**
DIESEL INTERNAL COMBUSTION ENGINE
MOTEUR À COMBUSTION INTERNE ENTRAÎNÉ PAR MOTEUR DIESEL

(30) Priorität: 27.06.2006 DE 102006029350
(43) Veröffentlichungstag der Anmeldung: 18.03.2009
(73) Patentinhaber: Gruber, Georg, 91161 Hilpoltstein (DE); Kaiser, Thomas, 85095 Denkendorf (DE); Dotzer, Alois, 90584 Allersberg (DE)
(72) Erfinder: Gruber, Georg, 91161 Hilpoltstein (DE); Kaiser, Thomas, 85095 Denkendorf (DE); Dotzer, Alois, 90584 Allersberg (DE)
(86) Internationale Anmeldenummer: PCT/EP2007/005689
(87) Internationale Veröffentlichungsnummer: WO 2008/000462

(56) Entgegenhaltungen:
- EP-A- 0 411 964
- DE-A1- 19 736 283
- DE-C1- 19 714 488
- FR-A1- 2 540 563

## Beschreibung

Die Erfindung betrifft eine dieselmotorisch betriebene Brennkraftmaschine nach dem Oberbegriff von Anspruch 1.

Insbesondere bei landwirtschaftlich genutzten Maschinen wird es heute immer interessanter, einen Kraftstoff einzusetzen, den der Landwirt selbst erzeugen kann und dessen Kosten er daher besser kalkulieren kann. Pflanzenöl erfüllt diese Voraussetzungen. Ölpflanzen, die einen hohen Ölertrag garantieren, können praktisch in jeder Klimazone angebaut werden. Die Pressung kann in kleinen dezentralen Anlagen vorgenommen werden, die entweder der Landwirt selbst oder eine landwirtschaftliche Vereinigung - wie beispielsweise ein Maschinenring - unterhalten.

Pflanzenöl verhält sich jedoch anders als Dieselkraftstoff. Während Dieselkraftstoff über einen großen Temperaturbereich seine Viskosität kaum ändert, wird Pflanzenöl mit sinkender Temperatur - abhängig von der Ölsorte - immer zähflüssiger. Es sind folglich nicht nur die Viskositäts-Temperatur-Kennlinien von Pflanzenöl und Dieselkraftstoff unterschiedlich, sondern es unterscheiden sich diesbezüglich auch die einzelnen Pflanzenölsorten untereinander ganz erheblich. Diese unterschiedlichen Eigenschaften müssen bei dem Kraftstoffkreislauf berücksichtigt werden.

Moderne dieselmotorisch betriebene Brennkraftmaschinen sind als Direkteinspritzer ausgelegt, wobei häufig ein Common-Rail-Einspritzsystem vorgesehen ist. Zwischen der Kraftstoffförderpumpe und der Hochdruckpumpe wird ein Kraftstofffilter verwendet, welches alle Partikel abhält, die die Hochdruckpumpe schädigen könnten. Das Kraftstofffilter muss folglich eine sehr geringe Maschenweite aufweisen, um dies gewährleisten zu können. Wenn die Brennkraftmaschine alternativ mit unterschiedlichen Kraftstoffen betrieben werden soll, muss das Kraftstofffilter andererseits aber auch für sehr zähflüssige Kraftstoffe durchlässig sein, da sonst die Hochdruckpumpe nicht genügend gefüllt werden kann.

Um diesen Widerspruch lösen zu können, wurde bereits versucht, den Kraftstofffilter über einen Bypass, der von dem Rücklauf zum Tank abzweigt, aufzuheizen, so dass an dem Kraftstofffilter immer Kraftstoff mit gleicher Temperatur ansteht. Dies hat jedoch dazu geführt, dass Dieselkraftstoff bereits zur Dampfblasenbildung neigt, wenn die Temperatur am Kraftstofffilter so eingestellt ist, dass zähflüssiges Pflanzenöl mit dem notwendigen Volumenstrom passieren kann.

Ähnliche Probleme haben sich aber auch bei Brennkraftmaschinen ergeben, bei denen vor der Kraftstoffförderpumpe ein Vorfilter eingesetzt ist. Um die Hochdruckpumpe des Einspritzsystems mit einem gleichmäßigen Vordruck versorgen zu können, müssen hochwertigere Kraftstoffförderpumpen eingesetzt werden als bei alten Einspritzsystemen. Diese Kraftstoffförderpumpen der neuesten Generation erfordern einen sehr reinen Kraftstoff, da sie, ähnlich wie die Hochdruckpumpen, durch Verunreinigungen beschädigt werden würden. Aus diesem Grund sind häufig bereits auf der Saugseite der Kraftstoffförderpumpe, also zwischen Tank und Kraftstoffförderpumpe Vorfilter eingebaut, die den Kraftstoff zumindest von gröberen Verunreinigungen befreien.

Auch bei diesen saugseitigen Vorfiltern ergeben sich Probleme, wenn die Brennkraftmaschine zum Teil mit Dieselkraftstoff oder mit unterschiedlichen Pflanzenölen betrieben wird. Das kalte, zähflüssige Pflanzenöl, das direkt dem Tank entnommen wird, verringert die Durchlässigkeit des Vorfilters und damit die Fördermenge der Kraftstoffförderpumpe. Das bedeutet, dass die Brennkraftmaschine nicht genügend Kraftstoff erhält, um mit Leistung betrieben werden zu können. Wärmt man andererseits den Kraftstoff stärker auf, besteht die Gefahr, dass zumindest Dieselkraftstoff zu kochen beginnt.

Aus der EP 0 411 964 A1 ist eine Brennkraftmaschine mit einem üblichen Niederdruck-Einspritzsystem für den Betrieb mit Dieselkraftstoff bekannt geworden. Der Rücklauf in den Tank wird durch eine Drossel in Verbindung mit einem Rückschlagventil aufgeteilt. Dadurch soll verhindert werden, dass sich der Kraftstofffilter mit verfestigten Bestandteilen des Kraftstoffs zusetzt.

In der FR 2 540 563 A1 ist eine Lösung gegen das Verstopfen von Leitungssystemen bei der Verwendung von paraffinhaltigem Dieselkraftstoff offenbart. Über zwei Rückschlagventile wird der Kraftstoff entsprechend dem an der Kraftstoffförderpumpe anliegenden Unterdruck aus dem Tank oder aus der Rücklaufleitung entnommen. Bei dem aus der Rücklaufleitung entnommenen Kraftstoff wird noch unterschieden, ob dieser durch den Kraftstofffilter geleitet oder direkt der Kraftstoffförderpumpe zugeführt wird.

DE 19 714 488 C beschreibt eine Brennkraftmaschine gemäß dem Oberbegriff des Anspruchs 1.

Der Erfindung liegt die Aufgabe zugrunde, eine dieselmotorische Brennkraftmaschine so auszubilden, dass unterschiedliche Kraftstoffe einen Kraftstofffilter mit dem notwendigen Volumenstrom passieren können und trotzdem bei keinem der Kraftstoffe die Bildung von Dampfblasen auftritt.

Gelöst wird die Aufgabe gemäß der Erfindung durch eine dieselmotorisch betriebene Brennkraftmaschine mit den Merkmalen von Anspruch 1. Durch die Aufteilung des Rücklaufes von der Einspritzeinrichtung kann warmer Kraftstoff dem Kraftstofffilter zugeleitet und muss nicht immer und nicht in voller Menge in den Tank zurückgeführt werden. Die Aufteilung ist abhängig von der Viskosität, die der Kraftstoff aufweist, wenn er das Einspritzsystem verlässt. War der von dem Einspritzsystem angesaugte Kraftstoff sehr zäh, so wirkt sich dies auch auf den Kraftstoff im Rücklauf nach dem Einspritzsystem aus. Dieser immer noch recht zähflüssige Kraftstoff wird dann nicht oder nur zu einem geringen Teil in den Tank zurückgeführt, sondern wird hauptsächlich zur Saugseite der Kraftstoffförderpumpe geleitet. Dies bedeutet, dass an dem Kraftstofffilter Kraftstoff mit höherer Temperatur ansteht, als sie der vom Tank kommende Kraftstoff aufweist. Erhöht sich die Temperatur des Kraftstoffes im Rücklauf und die Zähflüssigkeit nimmt ab, so erhöht sich auch die in den Tank rückgeführte Menge, und der wieder direkt zur Kraftstoffförderpumpe geführte Volumenstrom verringert sich entsprechend.

Am Kraftstofffilter steht dadurch üblicherweise eine Mischung aus Kraftstoff aus der Rückführleitung und Kraftstoff aus dem Tank an. Je weiter sich die Betriebstemperatur des Motors erhöht und damit die Zähflüssigkeit des Kraftstoffes verringert, desto größer wird die Menge des aus dem Tank angesaugten Kraftstoffes. Durch diese Regelung, die abhängig von der Viskosität des Kraftstoffes ist, ist gewährleistet, dass bereits kurz nach dem Start warmer Kraftstoff am Kraftstofffilter ansteht und die Brennkraftmaschine sehr schnell mit hoher Leistung betrieben werden kann. Gleichzeitig wird eine Überhitzung des Kraftstoffes vermieden, da heißer und dünnflüssiger Kraftstoff in den Tank rückgeführt wird.

Bei hoher Umgebungstemperatur und der Verwendung von Dieselkraftstoff oder sehr dünnflüssigen Pflanzenölen wird nach geraumer Laufzeit der Brennkraftmaschine praktisch der volle Kraftstoffbedarf aus dem Tank gedeckt und kaum noch Kraftstoff aus der Rückführleitung dem Kraftstofffilter zugeführt. Bei eher zähflüssigen Pflanzenölen kann die Phase, in der Kraftstoff aus der Rückführleitung der Kraftstoffförderpumpe zugeführt wird, wesentlich länger dauern. Bei sehr zähflüssigen Kraftstoffen und niedriger Außentemperatur kann es sogar vorkommen, dass während der gesamten Betriebszeit eine große Menge Kraftstoff aus der Rückführleitung und nur eine geringe Menge aus dem Tank dem Kraftstofffilter zugeführt wird.

Dies hat zur Folge, dass unabhängig von der verwendeten Kraftstoffsorte immer die selbe Filterfläche ausreichend ist. Üblicherweise muss bei sehr zähen Kraftstoffen die Filterfläche vergrößert werden - z. B. durch Parallelschaltung eines zweiten Kraftstofffilters - um die Hochdruckpumpe mit dem notwendigen Volumen versorgen zu können. Hierdurch wurden nicht nur die Investitionskosten, sondern auch die Servicekosten für den Tausch der Kraftstofffilter erhöht. Durch die Erfindung wird es nun möglich bei allen Kraftstoffen mit der gleichen Filterfläche auszukommen, da bei jedem Kraftstoff die Filtertemperatur so eingestellt wird, dass der Kraftstoff eine Viskosität aufweist die eine genügend große Durchlässigkeit des Kraftstofffilters gewährleistet.

Durch die erfinderische Maßnahme kann vor der Kraftstoffförderpumpe sogar ein Vorfilter mit einer Filterweite zwischen 30 und 60 µm eingesetzt werden. Ein so eng ausgelegter Vorfilter garantiert, dass keine die Förderpumpe schädigenden Partikel durchgelassen werden.

Ein Hauptfilter ist vorzugsweise auf der Druckseite der Kraftstoffförderpumpe vorgesehen. Dieser Hauptfilter hat üblicherweise eine Filterseite zwischen 2 und 5 µm und schützt die Hochdruckpumpe zuverlässig vor schädigenden Partikeln.

In vorteilhafter Weise ist zwischen der Kraftstoffförderpumpe und dem Hauptfilter ein Überdruckventil vorgesehen. Dieses Überdruckventil öffnet bei etwa 2,5 bar (der Wert ist beispielhaft; bei einem anderen Motor kann ein anderer Öffnungsdruck notwendig sein) und leitet Kraftstoff direkt zur Kraftstoffförderpumpe zurück. Hiermit wird insbesondere bei dem Betrieb mit zähflüssigem Pflanzenöl verhindert, dass sich vor dem Hauptfilter ein hoher Druck aufbauen kann, der den Hauptfilter zerstören könnte.

Auch zwischen dem Hauptfilter und der Hochdruckpumpe ist gemäß der Erfindung ein Überdruckventil vorgesehen, welches Kraftstoff ebenfalls direkt zur Kraftstoffförderpumpe zurückleiten kann. Dieses Überdruckventil öffnet bei ca. 0,5 bar (der Wert ist beispielhaft; bei einem anderen Motor kann ein anderer Öffnungsdruck notwendig sein). Mit dieser Maßnahme wird erreicht, dass - unabhängig von der Viskosität des Kraftstoffes - an der Hochdruckpumpe in etwa immer der gleiche Vordruck ansteht.

Die Erfindung ist grundsätzlich bei jedem Hochdruckeinspritzsystem, also auch bei Pumpe-Düse-Systemen, anwendbar. Besonders vorteilhaft wird sie jedoch bei einem Common-Rail-Einspritzsystem eingesetzt, das einen Druckspeicher und einen oder mehrere Injektoren aufweist.

Die Einrichtung, die den Kraftstoff in der Rückführleitung in einen Kraftstoffstrom in den Tank und in einen Kraftstoffstrom zum Kraftstofffilter aufteilt, weist erfindungsgemäß eine Drossel und ein Überdruckventil auf. Die Drossel befindet sich dabei in dem Teil der Rückführleitung, der den Rückstrom in den Tank aufnimmt. Das Überdruckventil regelt den Kraftstoffstrom zu dem Kraftstofffilter.

Steht nun an dieser Einrichtung zur Aufteilung des Kraftstoffstromes Kraftstoff mit verhältnismäßig großer Zähigkeit an, so fließt nur eine geringe Menge dieser zähen Flüssigkeit durch die enge Drosselöffnung. Es baut sich daher schnell ein Druck auf, der das Überdruckventil öffnet. Damit wird die Verbindung zu dem Kraftstofffilter freigegeben.

Erhöht sich während des Betriebs die Temperatur des an der Einrichtung zur Aufteilung anstehenden Kraftstoffes, so sinkt die Zähigkeit und das Pflanzenöl wird flüssiger. Damit erhöht sich auch der Kraftstoffstrom durch die Drosselöffnung. Der Druck vor der Drossel nimmt folglich ab und in Folge dessen auch die Menge, die über das Überdruckventil zu dem Kraftstofffilter abfließt.

Bei sehr flüssigem Kraftstoff ist es möglich, dass der komplette Kraftstoffstrom durch die Drossel in den Tank abgeführt wird.

Um in diesem Fall einen gering befüllten Tank nicht so weit aufzuheizen, dass der Dampfdruck im Tank zu hoch wird, kann der rückgeführte Kraftstoff, bevor er in den Tank eingeleitet wird, durch einen Kraftstoffkühler fließen.

Um den Kraftstofffilter mit warmem Kraftstoff bereits kurz nach dem Start zu versorgen, ist insbesondere der Kraftstoff geeignet, der von der Einspritzeinrichtung rückgeführt wird. Dieser Kraftstoff stammt zum Teil direkt aus den Injektoren und - bei einer Common-Rail-Einspritzung - auch aus einem Überdruckventil, welches den Druck in dem Druckspeicher konstant hält. Dieser Kraftstoff wurde hoch verdichtet, seine ursprüngliche Temperatur dabei stark erhöht und seine Zähigkeit entsprechend verringert.

Es kann jedoch auch der Kraftstoff aus dem Kühlkreislauf der Hochdruckpumpe zusammen mit dem Leckage-Kraftstoff der Hochdruckpumpe verwendet werden. Auch hier erfährt der Kraftstoff eine starke Temperaturerhöhung und eignet sich daher für die Heizung des Kraftstofffilters.

Idealerweise werden sowohl der Kraftstoff aus der Hochdruckpumpe als auch der Kraftstoff aus dem Einspritzsystem zusammengefasst und gemeinsam der Einrichtung zur Aufteilung des Kraftstoffstromes zugeführt.

Weitere Einzelheiten und Vorteile der Erfindung ergeben sich aus den Unteransprüchen im Zusammenhang mit der Beschreibung eines Ausführungsbeispiels, das anhand der Zeichnung eingehend erläutert wird.

Es zeigt:

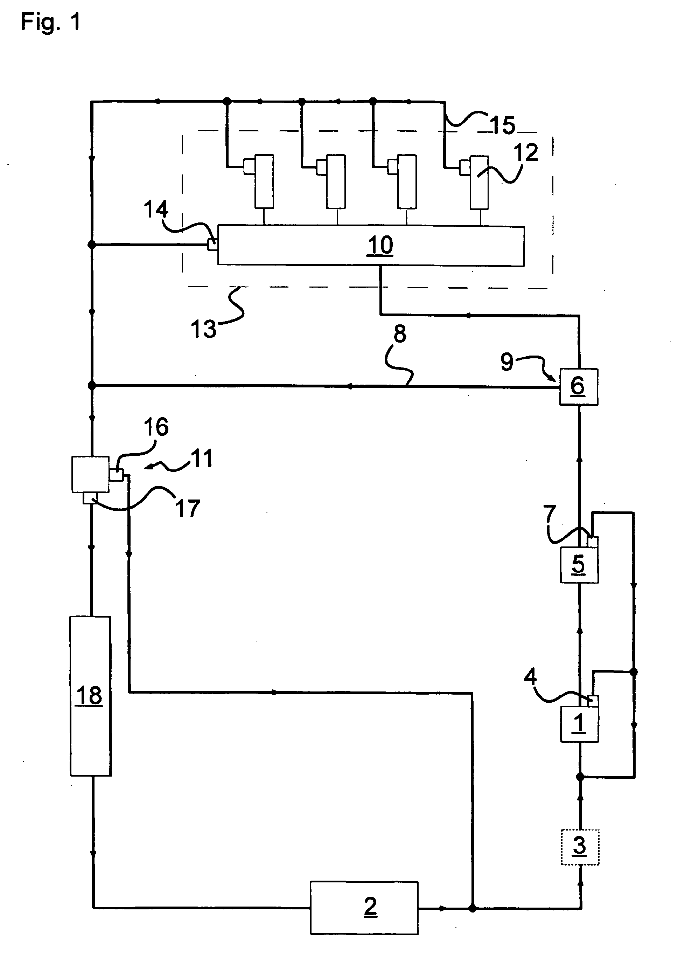

- Fig. 1: eine schematische Darstellung des Kraftstoffkreislaufs der erfindungsgemä- ßen Brennkraftmaschine.

Figur 1 stellt einen Kraftstoffkreislauf eines mit Pflanzenöl betriebenen Dieselmotors mit Common-Rail-Einspritztechnik schematisch dar. Der Kraftstoffkreislauf weist eine Kraftstoffförderpumpe 1 mit Überdruckventil 4, einen Tank 2, einen Vorfilter 3, einen Hauptfilter 5 mit Überdruckventil 7, eine Hochdruckpumpe 6 mit Kühlsystem 9, einen Kühlteilstrom 8, ein Regelventil 11 mit Überdruckventil 16 und Drossel 17, einen Kühler 18 und eine Einspritzeinrichtung 13 mit einem Druckspeicher 10, vier Injektoren 12, einem Überdruckventil 14 und vier Überschusskraftstoffströmen 15 auf.

Die Kraftstoffförderpumpe 1 saugt aus dem Tank 2 Kraftstoff an. In dem Tank 2 befindet sich ein in der Zeichnung nicht gezeigter Grobfilter, mit dem sehr große Partikel, wie z. B. Rost- oder Schmutzteilchen im Tank zurückgehalten werden. So ein Grobfilter verringert seine Durchlässigkeit auch bei kaltem und sehr zähflüssigem Pflanzenöl nur unmaßgeblich und muss daher auch nicht extra beheizt werden. Bevor der Kraftstoff die Kraftstoffförderpumpe 1 erreicht, wird er über den Vorfilter 3 gereinigt. Der Vorfilter 3 hat eine Filterweite von 30 µm. Der Vorfilter 3 ist ebenso wie die Kraftstoffförderpumpe 1 außerhalb des Tanks 2 angebracht. Alternativ kann der Vorfilter 3 aber auch entfallen und stattdessen der Grobfilter im Kraftstofftank 2 durch einen feinen Filter ersetzt werden. Der Vorfilter 3 ist daher gestrichelt gezeichnet.

Die Kraftstoffförderpumpe 1 weist ein Überdruckventil 4 auf. Das Überdruckventil 4 spricht bei einem Druck größer oder gleich 2,5 bar an und führt den über das Überdruckventil 4 abgeleiteten Kraftstoff wieder direkt der Saugseite der Kraftstoffförderpumpe 1 zu. Hiermit wird verhindert, dass am Hauptfilter 5 ein hoher Druck ansteht, der diesen eventuell beschädigen könnte.

Die Kraftstoffförderpumpe 1 führt über ihre Druckseite den Kraftstoff über den Hauptfilter 5 der Hochdruckpumpe 6 zu. Der Hauptfilter 5 hat die vom Hersteller üblicherweise vorgeschriebene Filterweite zwischen 2 und 5 µm. Das Überdruckventil 7 des Hauptfilters 5 spricht bei einem Druck größer oder gleich 0,5 bar an und führt den Kraftstoff direkt der Saugseite der Kraftstoffförderpumpe 1 zu.

Die Hochdruckpumpe 6 speist auf der Druckseite ein Common-Rail-Einspritzsystem 13. Weiterhin weist die Hochdruckpumpe 6 ein Kühlsystem 9 auf. Der an der Saugseite der Hochdruckpumpe 6 eintretende Kraftstoff wird in zwei Teilströme aufgeteilt, wobei ein Teilstrom dem Hochdruckteil zugeführt wird und der größere Teilstrom das Kühlsystem 9 speist. Das Kühlsystem 9 führt den Kraftstoff nach Verlassen der Hochdruckpumpe 6 über den Kühlteilstrom 8 der Eingangsseite des Regelventils 11 zu.

Der unter hohem Druck stehende Kraftstoff wird direkt dem Druckspeicher 10 zugeführt. Mit dem Druckspeicher 10 sind vier Injektoren 12 verbunden. Der Druckspeicher 10 weist ein Überdruckventil 14 auf, das den hierüber abgeleiteten Kraftstoff direkt der Eingangsseite des Regelventils 11 zuführt. An jedem Injektor 12 fällt ein Überschusskraftstoffstrom 15 an. Diese Überschusskraftstoffströme 15 werden zusammengeführt und dann ebenfalls der Eingangsseite des Regelventils 11 zugeführt. Das Regelventil 11 weist auf der Ausgangsseite ein Überdruckventil 16 und eine Drossel 17 auf. Kraftstoff, der über das Überdruckventil 16 läuft, wird direkt dem Vorfilter 3, oder falls auf einen Vorfilter verzichtet wird, der Ansaugseite der Kraftstoffförderpumpe 1 zugeführt. Kraftstoff, der über die Drossel 17 läuft, wird über den Kühler 18 dem Tank 2 zugeführt.

Diese Anordnung innerhalb des Kraftstoffkreislaufs dient dazu, insbesondere den oder die Kraftstofffilter 3, 5 möglichst schnell mit vorgewärmtem Kraftstoff zu versorgen, so dass weitgehend auf eine elektrische Heizung verzichtet werden kann. Das Besondere an dem Regelventil 11 ist nun, dass dieses nicht mit einem Temperatursensor arbeitet, sondern die Aufteilung des Kraftstoffstroms anhand der Viskosität des Kraftstoffes vornimmt.

Wenn der Kraftstoff sehr zähflüssig ist, wird der größere Anteil des Kraftstoffs über das Überdruckventil 16 abgeführt, da die Drossel 17 für zähe Flüssigkeiten nur eine geringe Durchlässigkeit aufweist. Dem Kraftstofffilter wird auf diese Weise bereits vorgewärmter Kraftstoff zur Verfügung gestellt. Dieser "Heizvorgang" hält so lange an bis der zurückfließende Kraftstoff dünnflüssiger wird. Dies ist in erster Linie von der Art des Kraftstoffes und erst in zweiter Linie von seiner Temperatur abhängig. Erst wenn der rückfließende Kraftstoff die richtige Viskosität hat, die am Filter benötigt wird, leitet das Regelventil 11 nur noch soviel Kraftstoff zu dem Filter, dass dieser Zustand aufrechterhalten werden kann.

Der restliche Kraftstoff wird über den Kühler 18 in den Tank 2 zurückgeführt. Wie viel Kraftstoff von dem Regelventil 11 zu dem Filter oder in den Tank geleitet wird, hängt folglich von der Viskosität des verwendeten Kraftstoffes ab. Bei gleicher Aufteilungsrate können sich die Temperaturen unterschiedlicher Kraftstoffe erheblich unterscheiden. Das Regelventil 11 sorgt so dafür, dass an dem Filter immer Kraftstoff mit der richtigen Temperatur und der richtigen Viskosität ansteht. Es wird verhindert, dass bei dem Betrieb mit Dieselkraftstoff dieser so stark aufgeheizt wird, dass er zur Blasenbildung neigt. Gleichzeitig wird verhindert, dass sehr zähflüssiges Pflanzenöl, wie z. B. Palmöl, zu wenig aufgeheizt wird, was die Durchlässigkeit des Filters stark verringern würde. Es wird sich folglich am Filter immer die für den verwendeten Kraftstoff passende Temperatur einstellen, die die richtige Viskosität des Kraftstoffes gewährleistet.

Hat sich die für den verwendeten Kraftstoff passende Temperatur eingestellt, so wird diese automatisch aufrechterhalten. Das Regelventil 11 leitet nur so viel Kraftstoff in den Tank zurück, dass die Viskosität des Kraftstoffes erhalten bleibt.

### Bezugszeichenliste:

- 1: Kraftstoffförderpumpe
- 2: Tank
- 3: Vorfilter
- 4: Überdruckventil
- 5: Hauptfilter
- 6: Hochdruckpumpe
- 7: Überdruckventil
- 8: Kühlteilstrom
- 9: Kühlsystem
- 10: Druckspeicher
- 11: Regelventil
- 12: Injektor
- 13: Common-Rail-Einspritzsystem
- 14: Überdruckventil
- 15: Überschusskraftstoffstrom
- 16: Überdruckventil
- 17: Drossel
- 18: Kühler

## Patentansprüche

1. Dieselmotorisch betriebene Brennkraftmaschine für den Betrieb mit verschiedenen Kraftstoffen unterschiedlicher Siedepunkte und unterschiedlicher Viskositäts-Temperatur-Kennlinien mit einem Kraftstoffkreislauf, der einen Kraftstofftank (2), eine Kraftstoffförderpumpe (1), wenigstens einen Kraftstofffilter (5, 3), eine Hochdruckpumpe (6), eine Einspritzeinrichtung (13) und einen Rücklauf in den Kraftstofftank (2) aufweist, wobei in dem Rücklauf eine Einrichtung (11) zur Aufteilung des Kraftstoffstroms zu dem Kraftstofftank (2) und/oder dem Kraftstofffilter (5, 3) vorgesehen ist, **dadurch gekennzeichnet, dass** die Aufteilung abhängig von der Viskosität des jeweiligen Kraftstoffes so vorgenommen wird, dass der Kraftstofffilter (5, 3) auf eine von dem jeweiligen Kraftstoff abhängige Temperatur aufgeheizt wird und dass zwischen dem Kraftstofffilter (3, 5) und der Hochdruckpumpe (6) ein Überdruckventil (7) vorgesehen ist.

2. Dieselmotorisch betriebene Brennkraftmaschine nach Anspruch 1, **dadurch gekennzeichnet, dass** der Kraftstofffilter ein Vorfilter (3) ist.

3. Dieselmotorisch betriebene Brennkraftmaschine nach Anspruch 2, **dadurch gekennzeichnet, dass** auf der Druckseite der Kraftstoffförderpumpe (1) ein Hauptfilter (5) mit einer Filterweite zwischen 2 und 5 µm vorgesehen ist.

4. Dieselmotorisch betriebene Brennkraftmaschine nach Anspruch 3, **dadurch gekennzeichnet, dass** zwischen der Kraftstoffförderpumpe (1) und dem Hauptfilter (5) ein zweites Überdruckventil (4) vorgesehen ist, welches mit der Kraftstoffleitung zwischen Vorfilter (3) und Kraftstoffförderpumpe (1) in Verbindung steht.

5. Dieselmotorisch betriebene Brennkraftmaschine nach Anspruch 3, **dadurch gekennzeichnet, dass** das zweite Überdruckventil (7) mit der Kraftstoffleitung zwischen Vorfilter (3) und Kraftstoffförderpumpe (1) in Verbindung steht.

6. Dieselmotorisch betriebene Brennkraftmaschine nach Anspruch 1, **dadurch gekennzeichnet, dass** die Einspritzeinrichtung (13) einen Druckspeicher (10) mit einem oder mehreren Injektoren (12) aufweist.

7. Dieselmotorisch betriebene Brennkraftmaschine nach Anspruch 1, **dadurch gekennzeichnet, dass** die Einrichtung (11) zur Aufteilung des Kraftstoffstroms eine Drossel (17) und ein drittes Überdruckventil (16) aufweist.

8. Dieselmotorisch betriebene Brennkraftmaschine nach Anspruch 7, **dadurch gekennzeichnet, dass** der Kraftstoff, der dem Kraftstofftank (2) zugeführt wird, durch die Drossel (17) und der Kraftstoff, der dem Kraftstofffilter (5, 3) zugeführt wird, durch das dritte Überdruckventil (16) fließt.

9. Dieselmotorisch betriebene Brennkraftmaschine nach Anspruch 1, **dadurch gekennzeichnet, dass** zwischen der Einrichtung (11) zur Aufteilung des Kraftstoffstroms und dem Kraftstofftank (2) ein Kraftstoffkühler (18) vorgesehen ist.

10. Dieselmotorisch betriebene Brennkraftmaschine nach Anspruch 1, **dadurch gekennzeichnet, dass** dem Kraftstofffilter (5, 3) Kraftstoff aus der Einspritzeinrichtung (13) zugeführt wird.

11. Dieselmotorisch betriebene Brennkraftmaschine nach Anspruch 1, **dadurch gekennzeichnet, dass** dem Kraftstofffilter (5, 3) Kraftstoff aus einem Kühl- und Leckagestrom (8) der Hochdruckpumpe (6) zugeführt wird.

## Claims

1. Diesel-operated combustion engine for operation with different fuels with different boiling points and different viscosity-temperature-characteristics with a fuel circuit, **characterised by** a fuel tank (2), a fuel supply pump (1), at least one fuel filter (5, 3), a high pressure pump (6), an injection means (13) and a return line to the fuel tank (2) in which the return line includes a means (11) for dividing the fuel flow to the fuel tank (2) and/or the fuel filter (5, 3), **characterised in that** the division depends on the viscosity of the respective fuel and is made in a way that the fuel filter (5, 3) is heated to a temperature depending on the respective fuel and that there is a pressure relief valve (7) installed between the fuel filter (3, 5) and the high pressure pump (6).

2. Diesel-operated combustion engine according to claim 1, **characterised in that** the fuel filter is a pre-filter (3).

3. Diesel-operated combustion engine according to claim 2, **characterised in that** there is a main filter (5) with a filter width between 2 and 5 µm installed on the pressure side of the fuel supply pump (1).

4. Diesel-operated combustion engine according to claim 3, **characterised in that** there is a second pressure relief valve (4) installed between the fuel supply pump (1) and the main filter (5), which is connected to the fuel pipe between prefilter (3) and fuel supply pump (1).

5. Diesel-operated combustion engine according to claim 3, **characterised in that** the second pressure relief valve (7) is connected with the fuel pipe between prefilter (3) and fuel supply pump (1).

6. Diesel-operated combustion engine according to claim 1, **characterised in that** the injection system means(13) is **characterised by** a pressure accumulator (10) with one or several injectors (12).

7. Diesel-operated combustion engine according to claim 1, **characterised in that** the means (11) for division of the fuel flow is **characterised by** a throttle (17) and a third pressure relief valve (16).

8. Diesel-operated combustion engine according to claim 7, **characterised in that** the fuel supplied to the fuel tank (2) flows through the throttle (17) and the fuel supplied to the fuel filter (5, 3) flows through the third pressure relief valve (16).

9. Diesel-operated combustion engine according to claim 1, **characterised in that** there is a fuel cooler (18) installed between the means (11) for division of the fuel flow and the fuel tank (2).

10. Diesel-operated combustion engine according to claim 1, **characterised in that** the fuel filter (5, 3) is supplied with fuel from the injection system means(13).

11. Diesel-operated combustion engine according to claim 1, **characterised in that** the fuel filter (5, 3) is supplied with fuel from a cooling and leakage flow (8) from the high pressure pump (6).

## Revendications

1. Moteur à combustion interne entraîné par un moteur diesel pour le fonctionnement avec des carburants ayant des points d'ébullition différents et des courbes caractéristiques viscosité-température différentes avec un circuit de carburant comportant un réservoir de carburant (2), une pompe d'alimentation de carburant (1), au moins un filtre à carburant (5, 3), une pompe haute pression (6), une pompe d'injection (13) et un retour au réservoir de carburant (2), **caractérisé par le fait que** le retour comporte un dispositif (11) de division du débit de carburant vers le réservoir de carburant (2) et/ou le filtre à carburant (5, 3), que la division est opérée en fonction de la viscosité du carburant respectif de manière à ce que le filtre à carburant (5, 3) soit chauffé à une température qui est fonction du carburant respectif et qu'entre le filtre à carburant (3, 5) et la pompe haute pression (6) soit disposée une soupape de surpression (7).

2. Moteur à combustion interne entraîné par un moteur diesel selon la revendication 1, **caractérisé par le fait que** le filtre à carburant est un préfiltre (3).

3. Moteur à combustion interne entraîné par un moteur diesel selon la revendication 2, **caractérisé par le fait que** le côté refoulement de la pompe d'alimentation carburant (1) soit muni d'un filtre principal (5) de finesse de tamis comprise entre 2 et 5 µ.

4. Moteur à combustion interne entraîné par un moteur diesel selon la revendication 3, **caractérisé par le fait qu'**entre la pompe d'alimentation carburant (1) et le filtre principal (5) se place une deuxième soupape de surpression (4) reliée à la conduite de carburant entre le préfiltre (3) et la pompe d'alimentation carburant (1).

5. Moteur à combustion interne entraîné par un moteur diesel selon la revendication 3, **caractérisé par le fait que** la deuxième soupape de surpression (7) est reliée à la conduite de carburant entre le préfiltre (3) et la pompe d'alimentation carburant (1).

6. Moteur à combustion interne entraîné par un moteur diesel selon la revendication 1, **caractérisé par le fait que** le dispositif d'injection (13) comporte un accumulateur de pression (10) à un ou plusieurs injecteurs (12)

7. Moteur à combustion interne entraîné par un moteur diesel selon la revendication 1, **caractérisé par le fait que** le dispositif (11) de division du débit de carburant comporte un restricteur (17) et une troisième soupape de surpression (16).

8. Moteur à combustion interne entraîné par un moteur diesel selon la revendication 7, **caractérisé par le fait que** le carburant amené au réservoir de carburant (2) passe par le restricteur (17) et que le carburant amené au filtre à carburant (5, 3) passe par la troisième soupape de surpression (16)

9. Moteur à combustion interne entraîné par un moteur diesel selon la revendication 1, **caractérisé par le fait qu'**un refroidisseur de carburant (18) est placé entre le dispositif (11) de division du débit de carburant et le réservoir de carburant (2).

10. Moteur à combustion interne entraîné par un moteur diesel selon la revendication 1, **caractérisé par le fait que** le carburant sortant du dispositif d'injection (13) est amené au filtre à carburant (5, 3).

11. Moteur à combustion interne entraîné par un moteur diesel selon la revendication 1, **caractérisé par le fait que** le carburant issu d'un écoulement de refroidissement et de fuite (8) de la pompe à haute pression (6) est amené au filtre à carburant (5, 3).
